# EUROPÄISCHE PATENTANMELDUNG

(11) **EP 2 316 603 A1**
(43) Veröffentlichungstag der Anmeldung: **04.05.2011**
(21) Anmeldenummer: 10013737.1
(22) Anmeldetag: 18.10.2010
(51) Int. Cl.: B23K 10/00

(54) **Verfahren zur Ausbildung von Markierungen auf Oberflächen von Werkstücken mit einem Plasmabrenner**

(30) Priorität: 30.10.2009 DE 102009053175
(71) Anmelder: Kjellberg Finsterwalde Plasma und Maschinen GmbH, 03238 Finsterwalde (DE)
(72) Erfinder: Krink, Volker, 03238 Finsterwalde (DE); Laurisch, Frank, 03238 Finsterwalde (DE); Zickert, Bernd, 03249 Sonnewalde OT Ossak (DE); Wolski, Uwe, 06118 Halle/S. (DE)
(74) Vertreter: Pfenning, Meinig & Partner GbR

(57) **Zusammenfassung**

Die Erfindung betrifft ein Verfahren zur Ausbildung von Markierungen auf der Oberfläche von Werkstücken mit einem Plasmabrenner. Aufgabe der Erfindung ist es, mittels Plasmabrenner Markierungen auf Oberflächen von Werkstücken auszubilden, die die mechanische Festigkeit des jeweiligen Werkstücks nicht oder nur unwesentlich verringern. Bei dem erfindungsgemäßen Verfahren werden der Plasmabrenner und ein Werkstück mindestens zweidimensional zueinander bewegt. Ein Plasma wird mittels einer als Kathode geschalteten Elektrode und einer Düse und/oder dem Werkstück, die/das als Anode geschaltet ist/sind, die an eine elektrische Stromquelle angeschlossen sind, und einem Plasmagas, das durch die Düse in Richtung auf die zu markierende Oberfläche gerichtet wird, gebildet. Mit dem Plasma werden durch einen Wärmeeintrag Markierungen auf der Oberfläche von Werkstücken ausgebildet. Dabei wird/werden der elektrische Strom der zur Plasmabildung eingesetzt wird, und/oder der Abstand der Düse des Plasmabrenners zur Oberfläche des Werkstücks, und/oder die Zusammensetzung des Plasmagases und/oder der Volumenstrom des zugeführten Plasmagases und/oder die Zusammensetzung eines Sekundärgases und/oder der Volumenstrom von zugeführtem Sekundärgases in Abhängigkeit der Vorschubgeschwindigkeit und/oder der elektrischen Spannung eines zwischen Plasmabrenner und Werkstück ausgebildeten Lichtbogens zur jeweiligen Zeit an der jeweiligen Bearbeitungsposition der Oberfläche des Werkstücks gesteuert und/oder geregelt.

## Beschreibung

Die Erfindung betrifft ein Verfahren zur Ausbildung von Markierungen auf der Oberfläche von Werkstücken mit einem Plasmabrenner.

Das Verfahren zum Markieren mittels Plasma wird überwiegend zum Beschriften, Zeichnen von Linien, Anbringen von Markierungen an Werkstücken, insbesondere von Metallen verwendet. Diese dienen der Kennzeichnung von Werkstücken, aber auch als Markierungen für die weitere Verarbeitung.

Die Ausrüstung dafür besteht zumindest aus folgenden Komponenten des Plasmasystems: elektrische Stromquelle, Plasmabrenner und eine Gassteuerung sowie den Verbindungsleitungen. Der Plasmabrenner selbst besteht im Wesentlichen aus einer Elektrode (Kathode), einer Düse, die üblicherweise an die elektrische Stromquelle als Anode angeschlossen ist, und der Halterung für diese Elemente. Häufig ist aber auch das Werkstück als Anode an die elektrische Stromquelle angeschlossen. Sind Düse und Werkstück an den gleichen Pol der elektrischen Stromquelle angeschlossen, kann die Düse beim Zünden nach der Ausbildung eines Pilotbogens von der elektrischen Stromquelle getrennt werden und es liegt die elektrische Spannung nur an der Elektrode des Plasmabrenners und dem Werkstück an. Die Plasmagaszufuhr kann im einfachsten Fall mit einem Ventil geregelt oder gesteuert werden.

Die Dimensionierung der jeweils ausgebildeten Markierung, d. h. die Breite und die Tiefe im Werkstück, kann durch den jeweiligen Wärmeeintrag, der zu einem Werkstoffabtrag führt, beeinflusst werden.

Für Fälle bei denen nur eine für den Bearbeitungsprozess vorgesehene Beschriftung oder Markierung benötigt wird, reicht in der Regel eine Oberflächenverfärbung aus. Diese ist nach einer nachfolgenden Behandlung der Oberfläche, z. B. Sandstrahlen, Verzinken, Farbgebung nicht mehr mit bloßem Auge sichtbar.

Werden aber Markierungen benötigt, die auch nach einer solchen Behandlung noch sichtbar sein sollen, müssen tiefere Markierungen (Kerben) eingebracht und entsprechend Werkstoff thermisch abgetragen werden. Mit punktförmigem Werkstoffabtrag können Körnungen als Ansatzhilfe für einen später noch durchzuführenden Bohrvorgang genutzt werden.

Für eine zumindest zweidimensionale Relativbewegung von Plasmabrenner und Werkstück kann der Plasmabrenner mittels eines Führungssystems bewegt werden. Hier kann es sich, z. B. um eine CNC-gesteuerte kartesische Führungsmaschine oder einen Roboter handeln.

Die Bearbeitung wird häufig auch programmgesteuert durchgeführt. Dabei kann für jedes Werkstück ein Bearbeitungsprogramm benutzt werden, mit dem nicht nur die jeweilige durchzuführende Relativbewegung von Plasmabrenner und Werkstück, sondern auch die einzelnen Plasmaparameter gesteuert werden können. So kann für jede Bearbeitungsposition die Vorschubgeschwindigkeit, die weitere Vorschubachsrichtung, die zufuhr von Plasmagas, die Parameter der elektrischen Stromversorgung und der bei einer möglichen dreidimensionalen Bewegbarkeit auch der Abstand zwischen Plasmabrenner und Oberfläche des Werkstücks vorgegeben werden.

Es hat sich herausgestellt, dass mit Plasmabrennern ausgebildete Markierungen Einfluss auf die Festigkeit des so bearbeitenden Werkstücks haben können. Insbesondere die dynamische Festigkeit kann sich erheblich reduzieren, wenn die Markierung "tief" in das Werkstück eindringt und ein entsprechend größerer lokal begrenzter Werkstoffabtrag erfolgt ist.

Dies ist in der Regel nicht der Fall, wenn lediglich thermische Verfärbungen an der Oberfläche, sogenannte Anlauffarben aber auch kleinere, möglichst gleichmäßige Vertiefungen ausgebildet worden sind. Während Verfärbungen keinen oder nur einen geringen Einfluss auf die dynamische Belastbarkeit ausüben, reduzierten "tiefe" Markierungen diese erheblich. Kritisch sind dabei Tiefen größer 50 µm und insbesondere ein lokal auftretender starker Anstieg der Tiefe von beim Markieren ausgebildeten Vertiefungen. Dadurch kann sich eine die mechanische Festigkeit negativ beeinflussende lokal begrenzte Kerbwirkung einstellen, die beim Betrieb auftretenden Belastungen eine Schwachstelle eines mit einem solchen Werkzeug hergestellten Bauteils darstellen.

Ein entsprechender lokal erhöhter Werkstoffabtrag tritt häufig an Bearbeitungspositionen auf, an den ein starker Wechsel der Vorschubachsrichtung bei der Relativbewegung von Plasmabrenner und Werkstück erforderlich ist und dort ein erhöhter Wärmeeintrag in das Werkstück zu einem höheren thermischen Werkstoffabtrag führt.

Aufgabe der Erfindung ist es daher, mittels Plasmabrenner Markierungen auf Oberflächen von Werkstücken auszubilden, die die mechanische Festigkeit des jeweiligen Werkstücks nicht oder nur unwesentlich verringern.

Erfindungsgemäß wird diese Aufgabe mit einem Verfahren, das die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Erfindungsgemäß kann dabei so vorgegangen werden, dass zur Ausbildung von Markierungen auf der Oberfläche von Werkstücken mit einem Plasmabrenner, bei dem der Plasmabrenner und ein Werkstück mindestens zweidimensional zueinander bewegt werden und ein Plasma mittels einer als Kathode geschalteten Elektrode und einer/dem als Anode geschalteten Düse und/oder dem Werkstück, die an eine elektrische Stromquelle angeschlossen sind, und einem Plasmagas, das durch die Düse in Richtung auf die zu markierende Oberfläche gerichtet wird, gebildet wird, und dabei durch einen Wärmeeintrag Markierungen auf der Oberfläche von Werkstücken ausgebildet werden.

Bei der Ausbildung von Markierungen kann dann eine Steuerung und/oder Regelung in Abhängigkeit von der Vorschubgeschwindigkeit und/oder der elektrischen Spannung eines zwischen Plasmabrenner und Werkstück ausgebildeten Lichtbogens zum jeweiligen Zeitpunkt und der jeweiligen Bearbeitungsposition durchgeführt werden.

Steuer- und/oder Regelgröße können dabei einmal der elektrische Strom der zur Plasmabildung eingesetzt wird, der Abstand der Düse des Plasmabrenners zur Oberfläche des Werkstücks, die Zusammensetzung des Plasmagases und/oder eines Sekundärgases und der Volumenstrom des zugeführten Plasmagases und/oder Sekundärgases sein. Dabei kann jede dieser Steuer- und Regelgrößen einzeln oder auch mindestens zwei dieser Größen gleichzeitig eingesetzt bzw. genutzt werden.

So kann bzw. können bei Reduzierung der Vorschubgeschwindigkeit oder der Veränderung der elektrischen Spannung des Lichtbogens, der elektrische Strom verringert, der Abstand zwischen Plasmabrenner und Oberfläche des Werkstücks vergrößert, Argon an Stelle von Luft oder Stickstoff als Plasmagas eingesetzt oder auch ein erhöhter Anteil an Argon in einem Plasmagasgemisch und/oder der Volumenstrom des zugeführten Plasmagases verringert werden. Bei Einsatz von Argon als Plasmagas kann der damit hervorgerufene thermische Werkstoffabtrag, in Bezug zum bei Einsatz von Stickstoff oder Luft, reduziert werden.

Bei sich verändernder elektrischer Spannung des Lichtbogens zwischen Plasmabrenner und Werkstück kann ein Über- oder Unterschreiten eines vorgebbaren Schwellwerts dazu führen, dass eine entsprechende Regelung mindestens eines der Parameter initiiert wird. Dies kann auch der Fall sein, wenn sich die elektrische Spannung verändert, dass sie außerhalb eines vorgegebenen Intervalls liegt. In der Regel wird aber das Überschreiten eines vorgegebenen Schwellwerts eine Regelung auslösen.

Bei einer Verringerung des elektrischen Stroms, der elektrischen Spannung, die an die Anode und Kathode des Plasmabrenners angelegt ist, sollte der elektrische Strom, der für die Plasmabildung eingesetzt wird, proportional, bevorzugt jedoch überproportional in Bezug zur sich verringernden Vorschubgeschwindigkeit verringert werden.

Im Falle einer Regelung können die Vorschubgeschwindigkeit, die Beschleunigung der Vorschubbewegung und/oder die Veränderung der Vorschubachsrichtung bestimmt werden. Hierfür können geeignete Sensoren an einem Plasmabrenner vorhanden sein. Eine Bestimmung dieser Größen kann aber auch für eine zusätzliche Überwachung mit Erhöhung der Betriebssicherheit vorgenommen werden, wenn das Verfahren ansonsten, wie in der Beschreibungseinleitung angesprochen, gesteuert betrieben wird und dabei auch die entsprechenden Parameter in Abhängigkeit der bei der Steuerung bekannten jeweiligen Vorschubgeschwindigkeit definiert verändert werden.

Die Veränderung der Betriebsparameter, die in Abhängigkeit der jeweiligen Vorschubgeschwindigkeit oder der elektrischen Spannung des Lichtbogens(Plasmastrahls) erfolgen soll, kann kontinuierlich oder stufenweise, im einfachsten Fall mit einer Stufe, erfolgen.

Bei der Erfindung ist es besonders vorteilhaft das Verfahren so durchzuführen, dass zuerst die jeweils gewünschten Markierungen an der Oberfläche des bearbeiteten Werkstücks mit dem Plasmabrenner ausgebildet werden. Nachfolgend daran kann die Kontur des Werkstücks durch einen formgebenden Schneidprozess mit demselben Plasmabrenner ausgebildet werden. Dieser wird dabei lediglich mit anderem zum Plasmaschneiden geeigneten Parametern betrieben. Das Werkstück muss dabei lediglich einmal eingespannt und/oder justiert werden. Markierungen, die für eine weitere nachfolgende Bearbeitung jeweilige Positionen kennzeichnen sollen, können dadurch äußerst maßgenau ausgebildet werden. Markieren und Plasmaschneiden können in derselben Position durchgeführt werden.

Nachfolgend soll die Erfindung an einem Beispiel näher erläutert werden.

Auf der Oberfläche eines Werkstücks aus Stahl mit einer Dicke von 3 mm sollen Markierungen ausgebildet werden. Die beiden Elektroden des Plasmabrenners werden mit einem elektrischen Strom von 10 A versorgt. Die elektrische Spannung wurde auf 85 V konstant gehalten. Es wurde bei einer Vorschubgeschwindigkeit von 2,5 m/min gearbeitet und reines Argon als Plasmagas dem Plasmabrenner zugeführt. Solange sich die Vorschubgeschwindigkeit sich nicht signifikant veränderte, konnten diese Parameter konstant gehalten werden.

Sinkt die Vorschubgeschwindigkeit auf einen Wert unter 70 % kann ein entsprechendes Messsignal von einem Führungssystem des Plasmabrenners oder einem geeigneten Sensor an die elektrische Stromquelle, im einfachsten Fall als Schaltkontakt gegeben bzw. übertragen werden. Die elektrische Stromquelle reduziert dann den Wert des elektrischen Stroms auf 6 A. Wird das Erreichen des Schwellwerts von 70% der Ausgangsvorschubgeschwindigkeit detektiert, also die Vorschubgeschwindigkeit hat sich entsprechend wieder erhöht, wird die elektrische Stromquelle aktiviert und der elektrische Strom wieder auf 10 A erhöht. Der thermische Werkstoffabtrag kann so bei sich verringernder Vorschubgeschwindigkeit reduziert werden. So kann die Gefahr der Kerbenbildung an einer Ecke oder einer anderen stärkeren Konturänderung bei der Ausbildung von Markierungen erheblich verringert werden.

Es kann aber auch am Plasmabrenner mindestens ein Geschwindigkeits- oder Beschleunigungssensor vorhanden sein, der seine Geschwindigkeit oder auch wirkende Beschleunigungen misst. Bei Abweichungen vom vorgegebenen Vorschubgeschwindigkeitswert oder einer Beschleunigung kann ein entsprechendes Messsignal generiert werden, das zur Regelung der anderen Betriebsparameter, wie insbesondere den elektrischen Strom, genutzt werden kann. Prinzipiell können der eine oder auch mehrere erfindungsgemäß zu verändernden Parameter kontinuierlich verändert werden.

Wird die jeweilige Beschleunigung bei der Vorschubbewegung des Plasmabrenners bestimmt, kann auch dieses Messsignal genutzt werden. So tritt eine Erhöhung der Beschleunigung auf, wenn die Vorschubgeschwindigkeit reduziert wird, bis ein minimaler Beschleunigungswert auftritt. Im Anschluss daran erhöht sich die Beschleunigung kurzzeitig, um nach einem weiteren Absinken bis zum Erreichen einer konstanten Vorschubgeschwindigkeit den Wert "Null" zu erreichen. Diese Wechsel der Beschleunigung treten immer dann auf, wenn sich die Vorschubachsrichtung stark ändert. Besonders stark ändert sie sich, wenn Richtungswechsel von mehr als 90° mit kleinem Radius durchgeführt werden sollen.

Mit einem geeigneten Beschleunigungssensor kann auch eine sich verändernde Vorschubachsrichtung detektiert und für die Beeinflussung mindestens eines der erfindungsgemäß zu verändernden Betriebsparameter des Plasmabrenners genutzt werden.

## Patentansprüche

1. Verfahren zur Ausbildung von Markierungen auf der Oberfläche von Werkstücken mit einem Plasmabrenner, bei dem der Plasmabrenner und ein Werkstück mindestens zweidimensional zueinander bewegt werden und ein Plasma mittels einer als Kathode geschalteten Elektrode und einer Düse und/oder dem Werkstück, die/das als Anode geschaltet ist/sind, die an eine elektrische Stromquelle angeschlossen sind, und einem Plasmagas, das durch die Düse in Richtung auf die zu markierende Oberfläche gerichtet wird, gebildet wird, mit dem durch einen Wärmeeintrag Markierungen auf der Oberfläche von Werkstücken ausgebildet werden,
**dadurch gekennzeichnet, dass**
der elektrische Strom der zur Plasmabildung eingesetzt wird, und/oder
der Abstand der Düse des Plasmabrenners zur Oberfläche des Werkstücks, und/oder die Zusammensetzung des Plasmagases und/oder der Volumenstrom des zugeführten Plasmagases und/oder die Zusammensetzung eines Sekundärgases und/oder der Volumenstrom von zugeführtem Sekundärgases in Abhängigkeit der Vorschubgeschwindigkeit und/oder der elektrischen Spannung eines zwischen Plasmabrenner und Werkstück ausgebildeten Lichtbogens zur jeweiligen Zeit an der jeweiligen Bearbeitungsposition der Oberfläche des Werkstücks gesteuert und/oder geregelt wird/werden.

2. Verfahren nach Anspruch 1, **dadurch gekennzeichnet, dass** bei Reduzierung der Vorschubgeschwindigkeit oder Veränderung der elektrischen Spannung des Lichtbogens,
der elektrische Strom verringert,
der Abstand zwischen Plasmabrenner und Oberfläche des Werkstücks vergrößert,
Argon an Stelle von Luft oder Stickstoff als Plasmagas oder ein erhöhter Anteil an Argon in einem Plasmagasgemisch eingesetzt und/oder der Volumenstrom des zugeführten Plasmagases und/oder des zugeführten Sekundärgases verringert wird/werden.

3. Verfahren nach Anspruch 1 oder 2, **dadurch gekennzeichnet, dass** der elektrische Strom, der für die Plasmabildung eingesetzt wird, proportional oder überproportional in Bezug zur sich verringernden Vorschubgeschwindigkeit verringert wird.

4. Verfahren nach einem der vorhergehenden Ansprüche, **dadurch gekennzeichnet, dass** für eine Regelung oder Überwachung die Vorschubgeschwindigkeit, die Beschleunigung der Vorschubbewegung und/oder die Veränderung der Vorschubachsrichtung bestimmt wird/werden.

5. Verfahren nach einem der vorhergehenden Ansprüche, **dadurch gekennzeichnet, dass** eine Regelung durchgeführt wird, wenn die detektierte elektrische Spannung des Lichtbogens zwischen Plasmabrenner und Werkstück einen vorgegebenen Schwellwert über- oder unterschreitet.

6. Verfahren nach einem der vorhergehenden Ansprüche, **dadurch gekennzeichnet, dass** eine Regelung durchgeführt wird, wenn die detektierte elektrische Spannung des Lichtbogens zwischen Plasmabrenner und Werkstück sich so verändert, dass sie außerhalb eines vorgegebenen Bereichs liegt.

7. Verfahren nach einem der vorhergehenden Ansprüche, **dadurch gekennzeichnet, dass** nach der Ausbildung der Markierung(en) das Werkstück in derselben justierten Position mit dem Plasmabrenner durch Plasmaschneiden einer Formgebung unterzogen wird.
